(19) Europäisches Patentamt
European Patent Office
Office européen des brevets

(11) Veröffentlichungsnummer: **0 048 887**
**B1**

# (12) EUROPÄISCHE PATENTSCHRIFT

(45) Veröffentlichungstag der Patentschrift: **01.08.84**

(51) Int. Cl.³: **C 09 K 3/34,** C 09 B 1/02, C 09 B 1/50

(21) Anmeldenummer: **81107270.1**

(22) Anmeldetag: **15.09.81**

(54) **Flüssigkristallgemisch mit einem pleochroitischen Anthrachinon-Farbstoff.**

(30) Priorität: **30.09.80 DE 3036896**

(43) Veröffentlichungstag der Anmeldung: **07.04.82 Patentblatt 82/14**

(45) Bekanntmachung des Hinweises auf die Patenterteilung: **01.08.84 Patentblatt 84/31**

(84) Benannte Vertragsstaaten: **CH DE FR GB IT LI NL SE**

(56) Entgegenhaltungen: **Keine**

(73) Patentinhaber: **Merck Patent Gesellschaft mit beschränkter Haftung, Frankfurter Strasse 250, D-6100 Darmstadt (DE)**

(72) Erfinder: **Scherowsky, Günther, Dr., Winklerstrasse 18B, D-1000 Berlin 33 (DE)**
Erfinder: **Möller, Alexander, Dipl.-Chem., Potsdamer Chaussee 50, D-1000 Berlin 38 (DE)**
Erfinder: **Heppke, Gerd, Prof., Dr., Johann-Georg-Strasse 3, D-1000 Berlin 31 (DE)**
Erfinder: **Knippenberg, Burkhard, Dipl.-Ing., Föttingerzeile 256, D-1000 Berlin 48 (DE)**

EP 0 048 887 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Flüssigkristall mit einem Anthrachinon-Farbstoff gemäss dem Oberbegriff des Anspruchs 1. Farbstoffe dieser Art gehören zum Gegenstand der älteren, nachveröffentlichten Patentanmeldung 81101325.9. Sie zeichnen sich vor allem dadurch aus, dass sie sich in üblichen Flüssigkristall-Mischungen in relativ grossen Mengen lösen lassen, dabei einen hohen Ordnungsgrad erreichen und vergleichsweise (foto-)stabil sind.

Die derzeit verfügbaren Farbstoffe absorbieren nur in einem relativ schmalen Bereich des sichtbaren Frequenzspektrums. Man muss sie daher mit anderen Farbstoffen mischen, wenn man eine Schwarz/Weiss-Darstellung haben will oder auf einen maximalen Hell/Dunkel-Kontrast Wert legt. Die bisher entwickelten Unbunt-Mischungen sind noch nicht akzeptabel, und zwar vor allem deshalb, weil sie zu geringe Löslichkeitsgrenzen haben und nicht in allen Bestandteilen ausreichend stabil sind. Diese Schwierigkeiten hängen unter anderem damit zusammen, dass man noch zu viele Komponenten benötigt, um ein einigermassen farbenunabhängiges Absorptionsspektrum zu erzeugen.

Der Erfindung liegt die Aufgabe zugrunde, von Anthrachinonderivaten eine Gruppe gelber Farbstoffe auszuwählen, die sich ohne sonderlichen Aufwand synthetisieren lassen, brauchbare Farbkontraste liefern und überdies zusammen mit einem blauen und einem roten Farbstoff ein unbuntes Gemisch mit guten Eigenschaften bilden können. Zu diesem Zweck wird erfindungsgemäss eine Flüssigkristall-Lösung mit den Merkmalen des Patentanspruchs 1 vorgeschlagen.

Flüssigkristalle mit besonders wertvollen Anthrachinon-Farbstoffen sind Gegenstand der Ansprüche 2 bis 4. Die Ansprüche 5 bis 7 enthalten Flüssigkristall-Lösungen, in denen die erfindungsgemäss vorgesehenen Anthrachinone durch nur zwei weitere Farbstoffe zu einem unbunten Gemisch mit hohen Kontrastwerten ergänzt sind.

Der Lösungsvorschlag soll nun anhand besonders bevorzugter Ausführungsbeispiele in Verbindung mit der beigefügten Zeichnung näher erläutert werden.

Dabei zeigen:

Fig. 1 von einer gelben Flüssigkristall-Lösung die Extinktionsspektren für Licht, das parallel bzw. senkrecht zur Längsachse der parallel ausgerichteten Farbstoff-Moleküle polarisiert ist;

Fig. 2 die Orte im Farbdreieck, die den Extinktionsspektren der Fig. 1 entsprechen;

Fig. 3 die Extinktionsspektren einer unbunten Flüssigkristall-Lösung;

Fig. 4 die den Extinktionsspektren der Fig. 3 zugeordneten Orte im Farbdreieck;

Fig. 5 die Extinktionsspektren einer weiteren unbunten Flüssigkristall-Lösung und

Fig. 6 die entsprechenden Lagen im Farbdreieck.

*Gelb-Beispiel 1*

1,5-Dihydroxy-2,6-di(4-pentoxyphenyl)anthrachinon

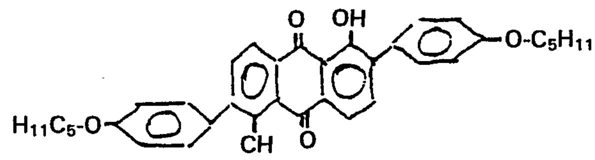

Synthese:

2,97 g (0,005 mol) 1,5-Diamino-4,8-dihydroxy-3,7-di(4-pentyloxyphenyl)anthrachinon werden in 40 ml Dimethylformamid gelöst und bei 40°C tropfenweise mit 6 ml Isoamylnitrit versetzt. Nach 1,5 h destilliert man das Lösungsmittel i.V. ab. Der Rückstand wird an Kieselgel chromatographiert und anschliessend aus Toluol umkristallisiert.

Schmp.: 205°C

$^1$H-NMR: ($AsCl_3$) $\delta$ = 1,0 (t, J=7H$_z$, 6H, $CH_2$-$\underline{CH_3}$); 1,3-1,6 (m, 8H, -$\underline{CH_2}$-$\underline{CH_2}$-$CH_3$); 1,7-1,9 (m, $\overline{4H}$, O-$CH_2$-$\underline{CH_2}$-); 4,1 (t, J=7H$_z$, 4H, -O-$\underline{CH_2}$); 7,05 (d, J=8H$_z$, 4H, Ar-H); 7,6-7,8 (m, 8H, Ar-H); 13,2 (s, 2H, -OH).

$\lambda_{max}$ ($CHCl_3$) = 453 nm

S = 0,70 (in «ZLI 1132» der Fa. Merck).

Die Fig. 1 zeigt das Absorptionsverhalten dieses Farbstoffs. In dem Diagramm ist die Extinktion E, die Licht beim Durchtritt durch eine Flüssigkristallschicht erfährt, gegen die Wellenlänge $\lambda$ aufgetragen. Gemessen wurden die E-Werte einmal für den Fall, dass das auftreffende Licht parallel zu den Längsachsen der einheitlich ausgerichteten Farbstoff-Moleküle schwingt (Kurve 1), und einmal für den Fall, dass das Licht eine Schwingungsebene senkrecht zur Vorzugsrichtung der Farbstoff-Moleküle hat (Kurve 2). Die Messwerte wurden an einer 36 $\mu$m dicken Schicht gewonnen, die aus der Flüssigkristall-Substanz «ZLI 1132» der Firme Merck mit einem Gehalt an 0,3 Gew.-% 1,5-Dihydroxy-2,6-di-(4-pentoxyphenyl) anthrachinon bestand und mit dem normierten Tageslicht «D 65» bestrahlt wurde.

Fig. 2 gibt Auskunft über den Farb-Eindruck, den die Flüssigkristall-Substanz in den beiden Extinktionszuständen beim Betrachter hinterlässt. Sie zeigt — in der üblichen Darstellungsweise mit rechtwinkligen Koordinaten — das sogenannte Farbdreieck. In diesem Koordinatensystem sind drei Punkte eingezeichnet: «$x_U$» ist der Unbunt-Punkt, «$x_P$» bezeichnet den aus der Kurve 1 berechneten Ort und «$x_S$» entspricht der Kurve 2.

*Gelb-Beispiel 2*

1,5-Dihydroxy-2,6-di(4-methoxyphenyl)anthrachinon

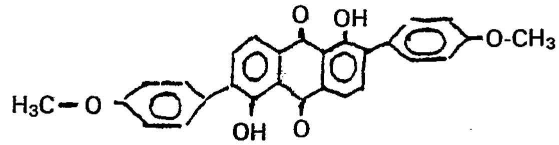

Synthese:

analog Gelb-Beispiel 1

$^1$H-NMR: ($AsCl_3$) $\delta$ = 3,85 (s, 6H, -O-$\underline{CH_3}$); 7,05 (d, J=8H$_z$, 4H, Ar-H); 7,6-7,8 (m, 8H, Ar-H); 13,25 (s, 2h, -O$_H$).

$\lambda_{max}$ ($CHCl_3$) = 452 nm

S = 0,74 (in «ZLI 1132» der Fa. Merck).

*Unbunt-Beispiel 1*

1,5-Dihydroxy-2,6-di(4-pentoxyphenyl)anthrachinon ergibt mit 1,5-Diamino-4,8-dihydroxy-3,7--di(4-methoxyphenyl)anthrachinon und mit 1,5-Diamino-6-(4-butylphenylamino-methyl)anthrachinon-2-carbaldehyd nahezu völlig unbunte Mischungen, wenn man auf die richtigen Mischungsverhältnisse achtet. Wird das Gemisch in «ZLI 1132» gelöst und rechnerisch — unter Beachtung der vorgegebenen Löslichkeitsgrenzen — durch Variation der Mischungsverhältnisse optimiert, dann erhält man eine Lösung, in der der gelbe Farbstoff mit 0,3 Gew.-%, der blaue mit 0,2 Gew.-% und der rote mit 0,1 Gew.-% vertreten sind. Die Fig. 3 zeigt die für dieses Mischungsverhältnis berechneten Extinktionsspektren einer 72 $\mu$m dicken Schicht. Diese Kurven korrespondieren mit den in Fig. 4 eingezeichneten Punkten im Farbdreieck.

*Unbunt-Beispiel 2*

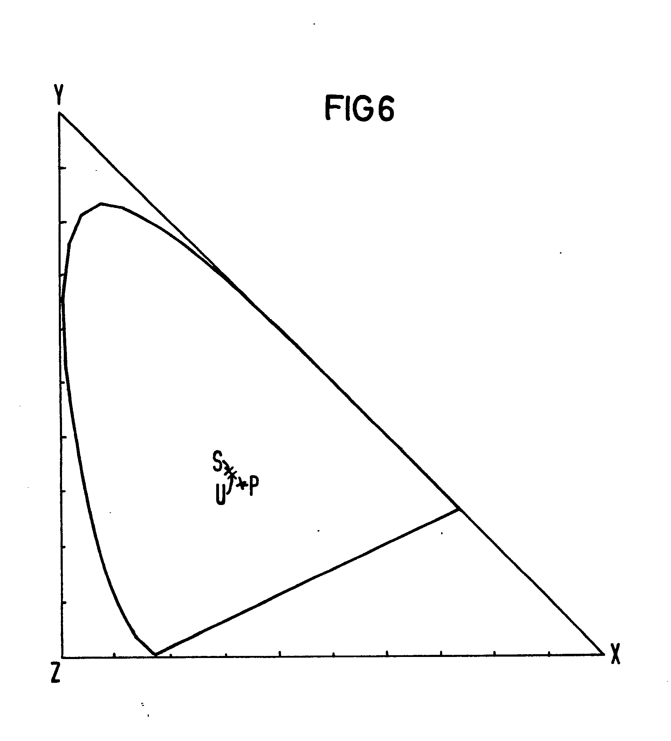

Der rote Farbstoff aus dem Unbunt-Beispiel 1 ist durch den Azofarbstoff, der von der Firma BDH Chemicals Ltd. unter der Bezeichnung «D2» vertrieben wird, ersetzt. Optimiert man in gleicher Weise eine «ZLI 1132»-Lösung, so errechnet sich ein Gelb-Anteil von 0,2 Gew.-%, ein Blau-Anteil von 0,6 Gew.-% und ein Rot-Anteil von 0,2 Gew.-%. Die entsprechenden Extinktionskurven, die wiederum durch Überlagerung der drei Einzelspektren ermittelt wurden, sind in Fig. 5 dargestellt. Fig. 6 zeigt die zugehörigen Koordinaten im Farbdreieck.

Der Azofarbstoff «D2» hat folgende Strukturformel:

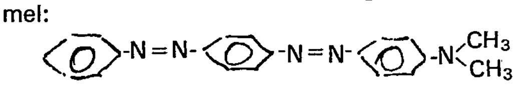

Die Substanz «ZLI 1132» ist ein Phenylcyclohexangemisch aus den vier Verbindungen

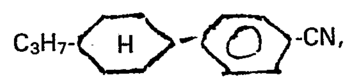,

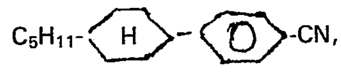,

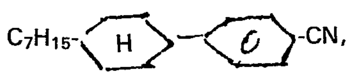,

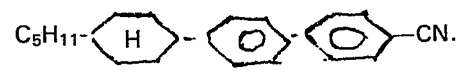.

## Patentansprüche

1. Flüssigkristallgemisch mit einem pleochroitischen Anthrachinon-Farbstoff der allgemeinen Formel

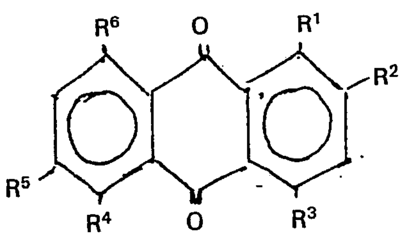

wobei $R^1$, $R^3$, $R^4$, $R^6$ = H, OH, $NH_2$, $NO_2$ und $R^2$, $R^5$ = Alkyloxyphenyl, dadurch gekennzeichnet, dass entweder $R^1$ = OH, $R^3$ = $R^6$ = H, $R^4$ = H, OH, $NH_2$, $NO_2$ oder $R^1$ = $R^4$ = H, $R^3$ = OH, $R^6$ = H, OH, $NH_2$, $NO_2$.

2. Flüssigkristallgemisch nach Anspruch 1, dadurch gekennzeichnet, dass gilt $R^1$ = $R^4$ = OH und

$R^2$ = $R^5$ = 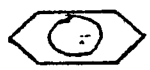 $-O-C_nH_{2n+1}$ $(0 < n \leq 8)$.

3. Flüssigkristallgemisch nach Anspruch 2, dadurch gekennzeichnet, dass gilt n = 1.

4. Flüssigkristallgemisch nach Anspruch 2, dadurch gekennzeichnet, dass gilt n = 5.

5. Flüssigkristallgemisch nach einem der Ansprüche 1 bis 4, dadurch gekennzeichnet, dass es ausserdem noch einen blauen und einen roten Farbstoff enthält, wobei die aus den drei Farbstoffen gebildete Mischung unbunt ist und vorzugsweise wenigstens einer der beiden zusätzlichen Farbstoffe ein Anthrachinon ist.

6. Flüssigkristallgemisch nach Anspruch 5, dadurch gekennzeichnet, dass der blaue Farbstoff ein 1,5-Diamino-4,8-dihydroxy-3,7-di(4-methoxyphenyl)anthrachinon ist, dass der rote Farbstoff ein 1,5-Diamino-6-(4-butylphenylimino-methyl)anthrachinon-2-carbaldehyd ist und dass der dritte Farbstoff ein 1,5-Dihydroxy-2,6-di(4-penoxyphenyl)anthrachinon ist, wobei die drei Farbstoffe im Gewichtsverhältnis 1 : 0,3 - 0,7 : 1,3 - 1,8, insbesondere etwa 1 : 0,5 : 1,5, zueinander stehen.

7. Flüssigkristallgemisch nach Anspruch 5, dadurch gekennzeichnet, dass der blaue Farbstoff ein 1,5-Diamino-4,8-dihydroxy-3,7-di(4-methoxyphenyl)anthrachinon ist, dass der rote Farbstoff ein 4-Dimethylamino-4-phenylazo-azobenzol ist und dass der dritte Farbstoff ein 1,5-dihydroxy-2,6-di-(4-pentoxyphenyl)anthrachinon ist, wobei die drei Farbstoffe im Gewichtsverhältnis 1 : 0,2 - 0,4 : 0,2 bis 0,4, insbesondere etwa 1 : 0,33 : 0,33, zueinander stehen.

## Claims

1. A liquid crystal mixture comprising a pleochroic anthraquinone dye of the general formula:

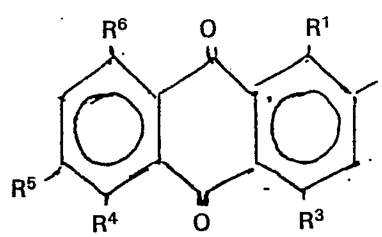

where $R^1$, $R^3$, $R^4$, $R^6$ = H, OH, $NH_2$, $No_2$ and $R^2$, $R^5$ = alkylphenyl, characterised in that either $R^1$ = OH, $R^3$ = $R^6$ = H, $R^4$ = H, OH, $NH_2$, $NO_2$ or $R^1$ = $R^4$ = H, $R^3$ = OH, $R^6$ = H, OH, $NH_2$, $NO_2$.

2. A liquid crystal mixture according to claim 1, characterised in that $R^1$ = $R^4$ = OH and $R^2$ = $R^5$ =

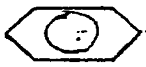 $-O-C_nH_{2n+1}$ $(0 < n \leq 8)$.

3. A liquid crystal mixture according to claim 2, characterised in that n = 1.

4. A liquid crystal mixture according to claim 2, characterised in that n = 5.

5. A liquid crystal mixture according to one of claims 1 to 4, characterised in that the mixture further includes a blue and a red dye, the mixture formed from the three dyes being achromatic and at least one of the two additional dyes preferably being an anthraquinone.

6. A liquid crystal mixture according to claim 5, characterised in that the blue dye is a 1,5-diamino-4,8-dihydroxy-3,7-di(4-methoxyphenyl)anthraquinone; that the red dye is a 1,5-diamino-6-(4-butylphenylimino-methyl)anthraquinone-2-carbaldehyde; and that the third dye is a 1,5-dihydroxy-2,6-di(4-pentoxyphenyl)anthraquinone, the three dyes having a weight ratio with respect to one another of 1 : 0.3 - 0.7 : 1.3 - 1.8, in particular of approximately 1 : 0.5 : 1.5.

7. A liquid crystal mixture according to claim 5, characterised in that the blue dye is a 1,5-diamino-4,8-dihydroxy-3,7-di(4-methoxyphenyl)anthraquinone; that the red dye is a 4-dimethylamino-4-phenylazo-azobenzene; and that the third dye is a 1,5-dihydroxy-2,6-di(4-pentoxyphenyl)anthraquinone, the three dyes having a weight ratio with respect to one another of 1 : 0.2 - 0.4 : 0.2 - 0.4, in particular of approximately 1 : 0.33 : 0.33.

**Revendications**

1. Mélange de cristaux liquides ayant un colorant anthraquinonique pléochroïque de formule développée

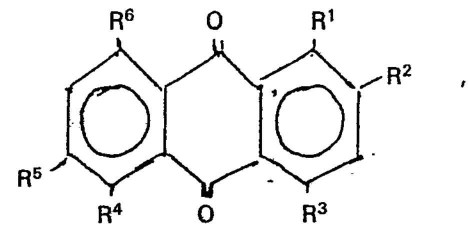 ,

dans laquelle $R^1$, $R^3$, $R^4$, $R^6$ = H, OH, $NH_2$, $NO_2$ et $R^2$, $R^5$ = alcoxyphényle, caractérisé en ce que ou bien $R^1$ = OH, $R^3$ = $R^6$ = H, $R^4$ = H, OH, $NH_2$, $NO_2$ ou bien $R^1$ = $R^4$ = H, $R^3$ = OH, $R^6$ = H, OH, $NH_2$, $NO_2$.

2. Mélange de cristaux liquides suivant la revendication 1, caractérisé en ce que $R^1$ = $R^4$ = OH et $R^2$ = $R^5$ = 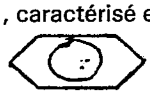 $-O-C_nH_{2n+1}$ $(0 < n \leq 8)$.

3. Mélange de cristaux liquides suivant la revendication 2, caractérisé en ce que n = 1.

4. Mélange de cristaux liquides suivant la revendication 2, caractérisé en ce que n = 5.

5. Mélange de cristaux liquides suivant l'une des revendications 1 à 4, caractérisé en ce qu'il contient, en outre, un colorant bleu et un colorant rouge, le mélange formé par les trois colorants étant non coloré, de préférence, au moins l'un des deux colorants supplémentaires est une anthraquinone.

6. Mélange de cristaux liquides suivant la revendication 5, caractérisé en ce que le colorant bleu est une 1,5-diamino-4,8-dihydroxy-3,7-di(4-méthoxyphényl)anthraquinone, en ce que le colorant rouge est un 1,5-diamino-6-(4-butylphénylimino-methyl)-anthraquinone-2-carbaldéhyde et en ce que le troisième colorant est une 1,5-dihydroxy-2,6-di(4-phénoxyphényl)anthraquinone, les trois colorants étant présents dans le rapport pondéral de 1 : 0,3 à 0,7 : 1,3 à 1,8 et notamment d'environ 1 : 0,5 : 1,5.

7. Mélange de cristaux liquides suivant la revendication 5, caractérisé en ce que le colorant bleu est une 1,5-diamino-4,8-dihydroxy-3,7-di(4-méthoxyphenyl)anthraquinone, en ce que le colorant rouge est un 4-diméthylamino-4-phénylazo-azobenzène et en ce que le troisième colorant est une 1,5-dihydroxy-2,6-di(4-pentoxyphénol)anthraquinone, les trois colorants étant présents dans le rapport pondéral de 1 : 0,2 à 0,4 : 0,2 à 0,4 et, de préférence, d'environ 1 : 0,33 : 0,33.

FIG1

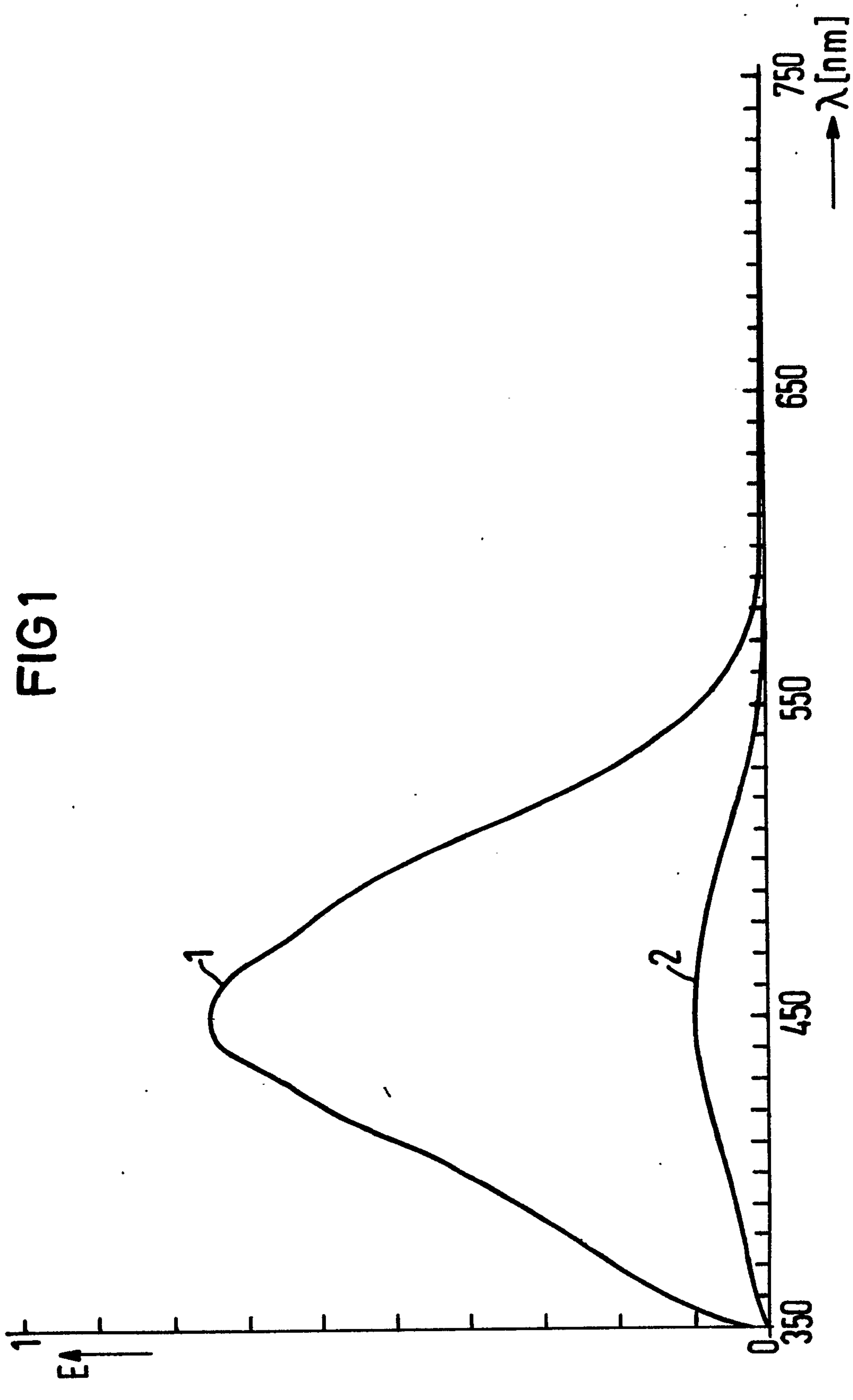

FIG 2

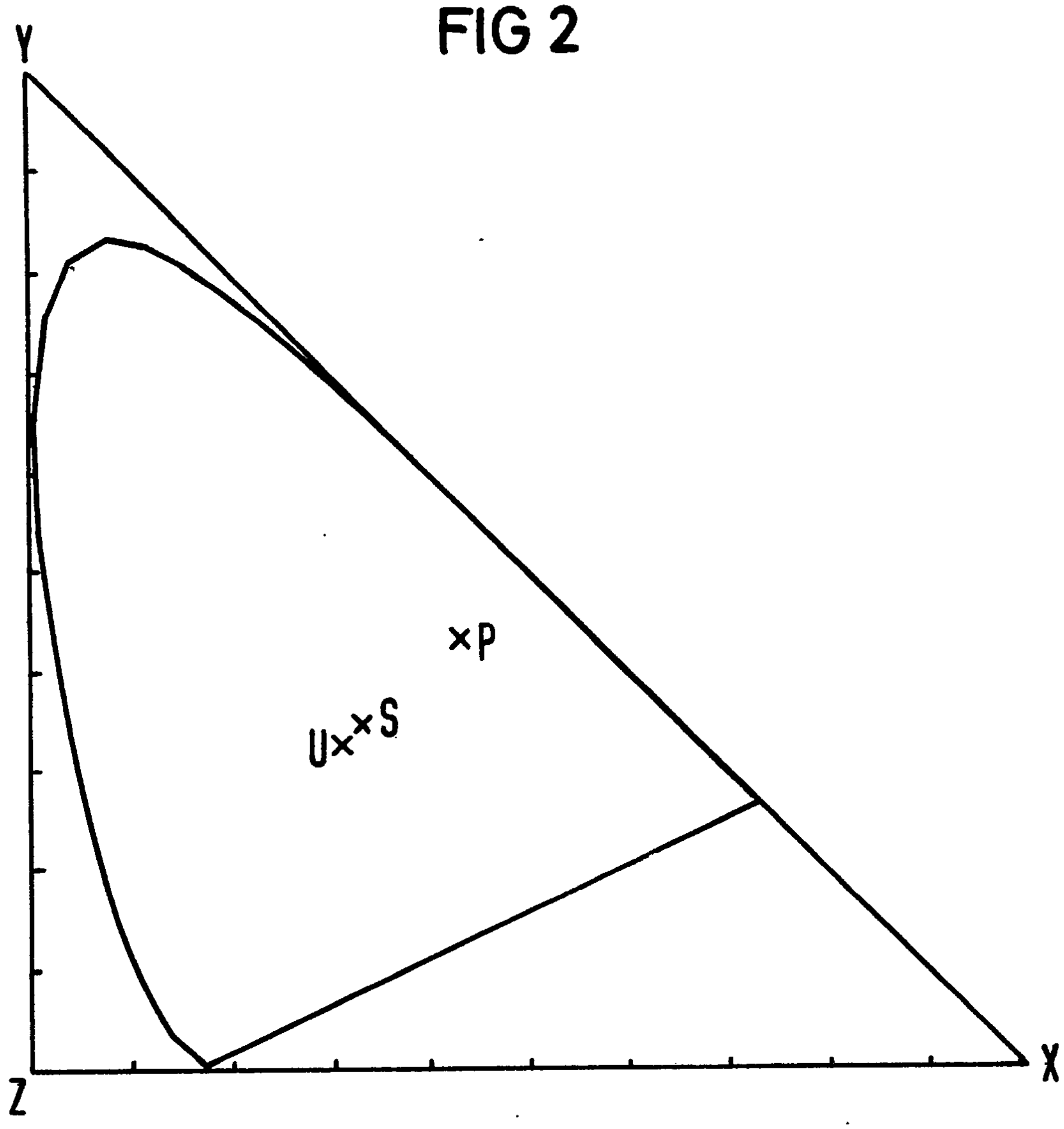

FIG3

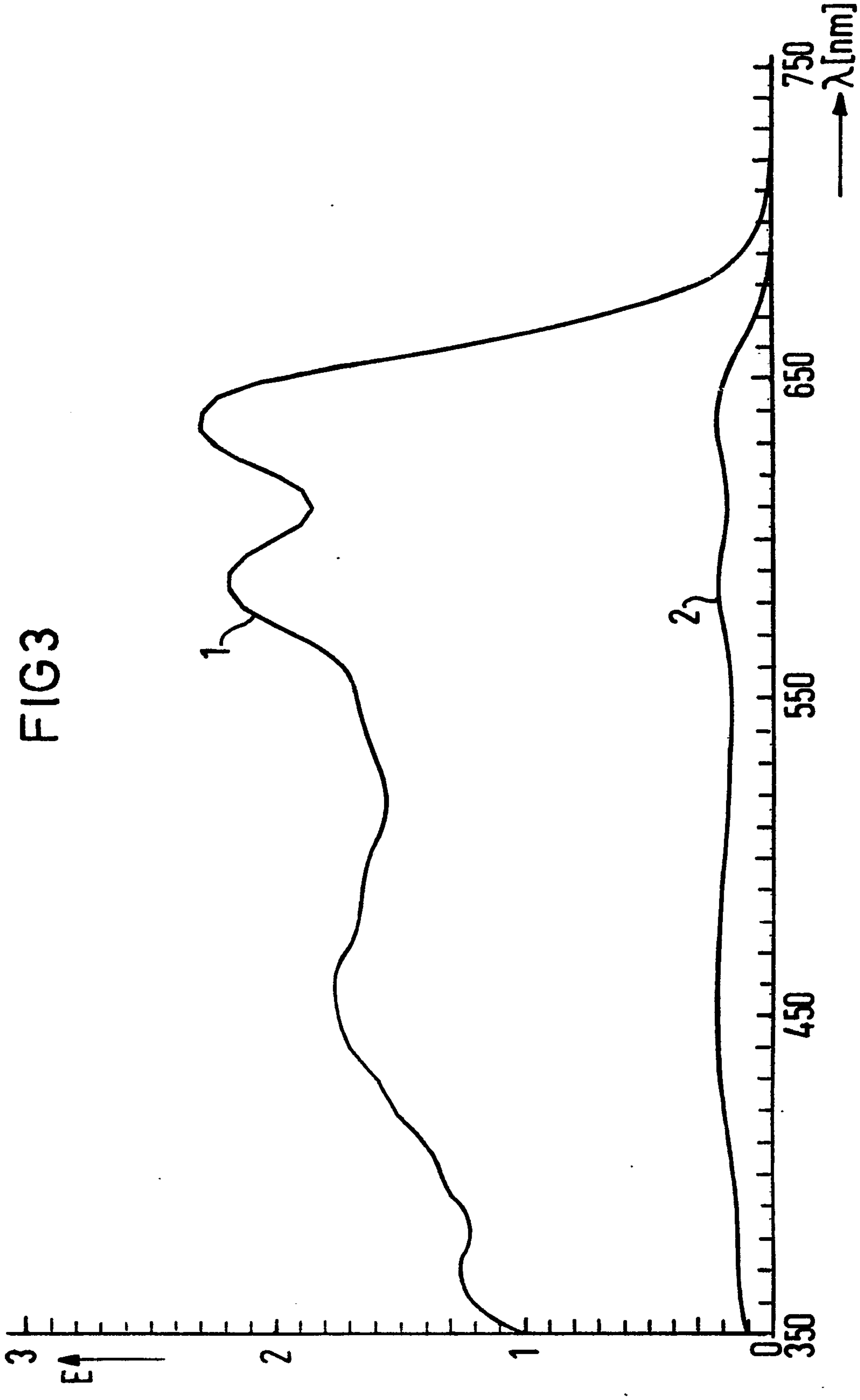

FIG 4

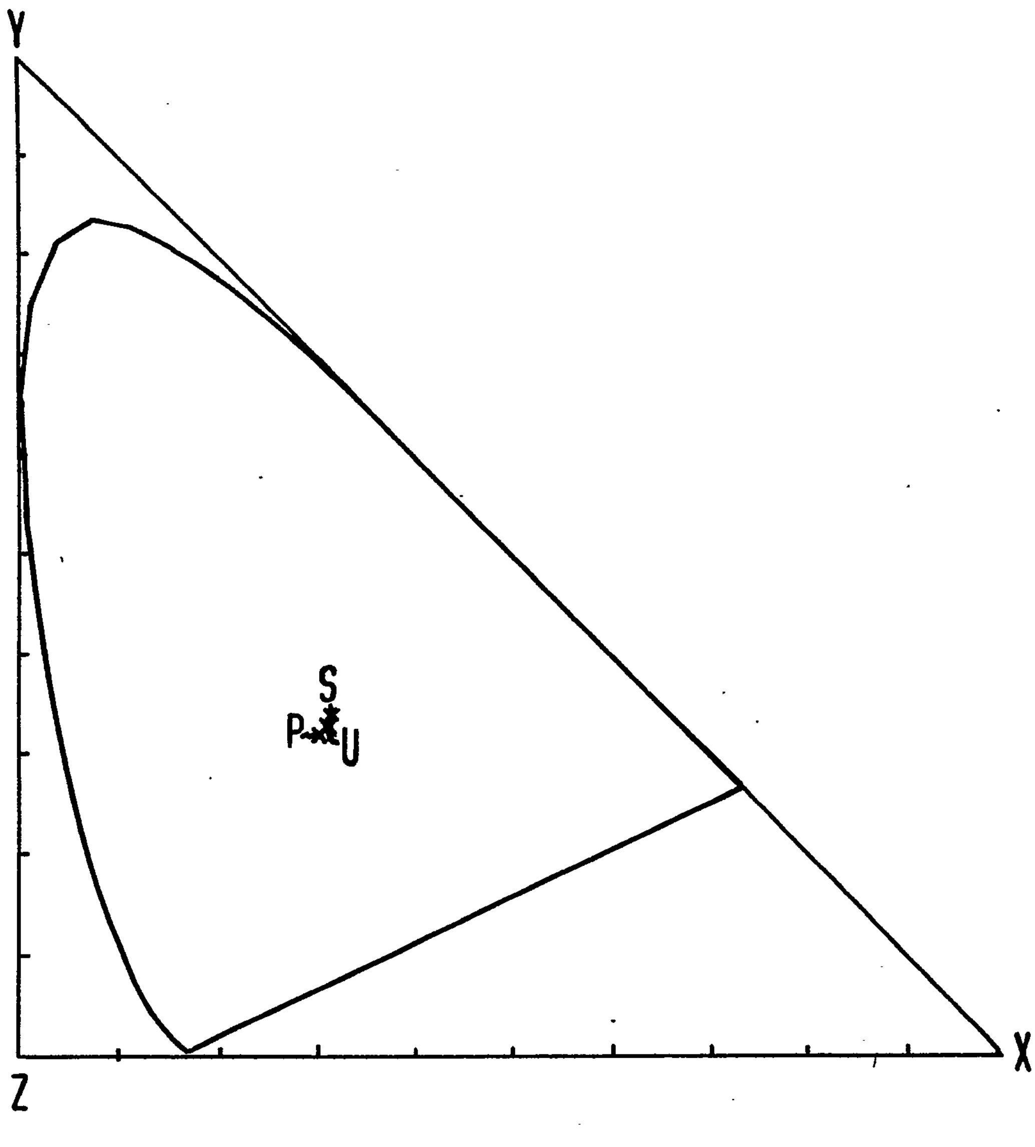

FIG 5

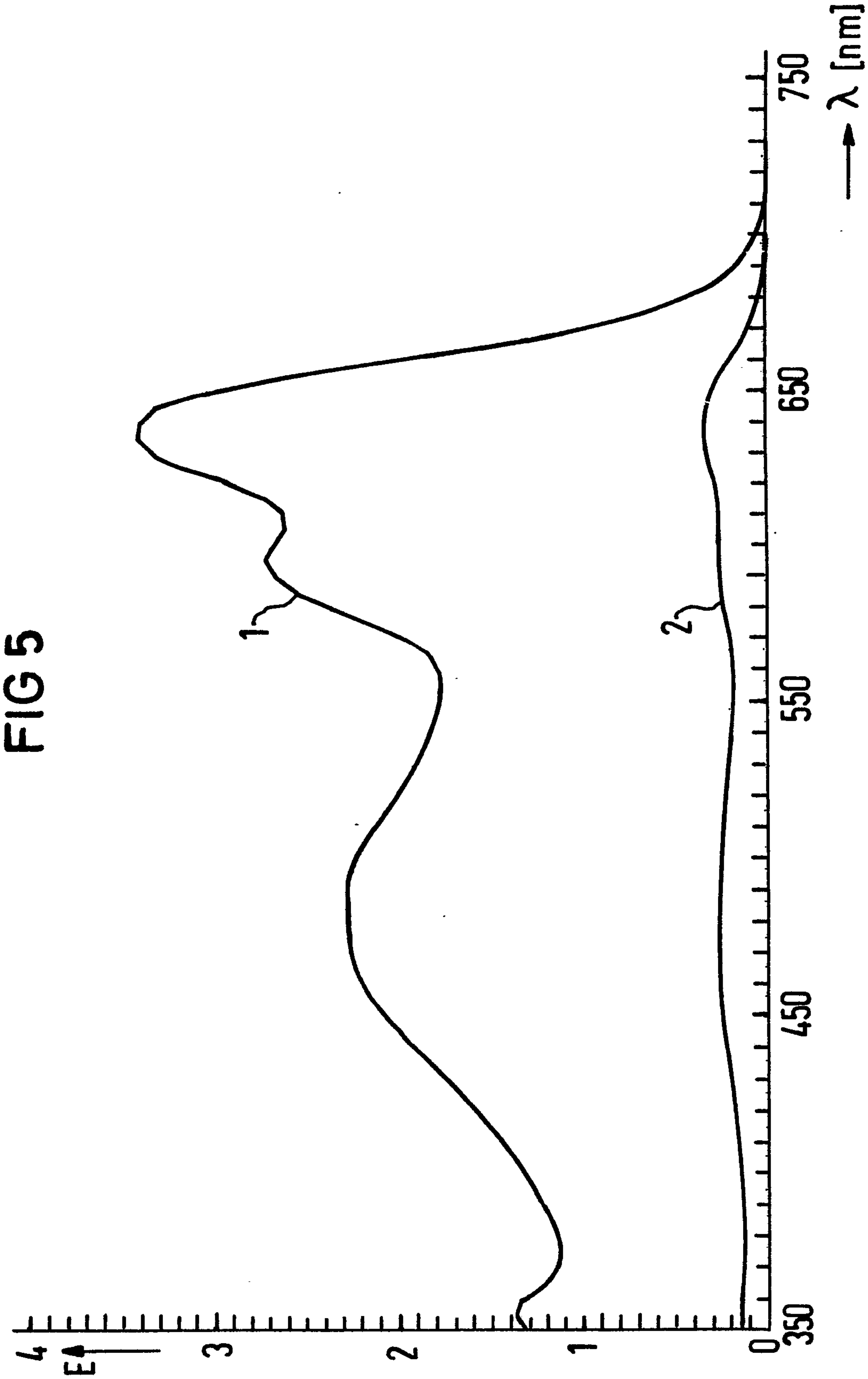

FIG 6